(19) Europäisches Patentamt
European Patent Office
Office européen des brevets

(11) **EP 4 063 804 B1**

(12) **FASCICULE DE BREVET EUROPEEN**

(45) Date de publication et mention
de la délivrance du brevet:
**29.11.2023  Bulletin 2023/48**

(21) Numéro de dépôt: **22161296.3**

(22) Date de dépôt: **10.03.2022**

(51) Classification Internationale des Brevets (IPC):
**G01F 15/10** [(2006.01)]    **G01F 1/00** [(2022.01)]
**E03B 7/10** [(2006.01)]

(52) Classification Coopérative des Brevets (CPC):
**G01F 1/00; G01F 15/10;** E03B 7/10

(54) **PROCÉDÉ DE PRÉDICTION DU RISQUE DE GEL D'UN LIQUIDE ET COMPTEUR DE LIQUIDE ASSOCIÉ**

VERFAHREN ZUR VORHERSAGE DES GEFRIERRISIKOS EINER FLÜSSIGKEIT UND ZUGEHÖRIGER FLÜSSIGKEITSZÄHLER

METHOD FOR PREDICTING THE RISK OF FREEZING OF A LIQUID AND ASSOCIATED LIQUID COUNTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **25.03.2021  FR 2103048**

(43) Date de publication de la demande:
**28.09.2022  Bulletin 2022/39**

(73) Titulaire: **Sagemcom Energy & Telecom SAS**
**92500 Rueil-Malmaison (FR)**

(72) Inventeurs:
• **SABRAOUI, Abbas**
  **92500 RUEIL MALMAISON (FR)**

• **ABID, Oussama**
  **92500 RUEIL MALMAISON (FR)**
• **LECOCQ, Guillaume**
  **92500 RUEIL MALMAISON (FR)**

(74) Mandataire: **Lavaud, Thomas**
**Cabinet Boettcher**
**5, rue de Vienne**
**75008 Paris (FR)**

(56) Documents cités:
**CA-A1- 3 124 955        JP-A- 2003 193 522
KR-A- 20140 104 592     KR-B1- 102 116 121
US-A- 3 534 604            US-A1- 2017 138 023**

**Description**

L'invention concerne le domaine des compteurs de liquide.

ARRIERE PLAN DE L'INVENTION

Les épisodes de froid en hiver soumettent régulièrement les canalisations d'eau à de rudes épreuves. Un vrai danger se présente si l'eau contenue dans les canalisations gèle. Le volume de l'eau augmente alors, ce qui peut entraîner l'apparition de fissures, voire la destruction des canalisations, tuyauteries ou encore des compteurs d'eau.

Les documents US 2017/0138023 A1 ou KR 2014 0104592 A divulguent des procédés basés sur une mesure de température de surface d'une canalisation ou sur une mesure de température de l'eau à l'intérieur d'une canalisation.

L'ensemble de ces détériorations représente un réel désagrément pour le distributeur d'eau mais aussi pour le client qui se retrouve d'une part privé d'eau et d'autre part contraint parfois d'effectuer des réparations à sa charge.

Certains compteurs d'eau existants évaluent le risque de gel en mesurant la température de l'eau, en comparant la température de l'eau avec un seuil prédéterminé (par exemple égal à 3°C), et en générant une alarme lorsque la température de l'eau devient inférieure au seuil prédéterminé.

Cette méthode présente les inconvénients suivants. Comme l'alarme est générée dès que la température de l'eau passe sous le seuil prédéterminé, le client n'a généralement pas le temps nécessaire pour prendre les mesures adéquates permettant de protéger le compteur d'eau et son installation.

De plus, cette méthode est peu fiable et présente un risque élevé de « faux positifs ». Ainsi, il est possible que l'eau, lorsqu'elle s'écoule avec un certain débit, atteigne une température proche de 0°C sans geler, par exemple si le compteur est installé en intérieur et que l'eau vient de l'extérieur. La seule prise en compte de la température de l'eau pour détecter le gel de l'eau provoque dans ce cas la génération d'une fausse alarme, ce qui constitue un désagrément certain pour le distributeur et pour le client.

OBJET DE L'INVENTION

L'invention a pour objet de prédire le risque de gel d'un liquide qui circule dans le conduit d'un compteur, de manière fiable et suffisamment anticipée pour permettre au distributeur ou au client d'agir.

RESUME DE L'INVENTION

En vue de la réalisation de ce but, on propose un procédé de prédiction du gel d'un liquide qui circule dans un conduit d'un compteur de liquide, comprenant les étapes de :

-  acquérir des mesures d'une température de l'air dans le compteur de liquide ;
-  évaluer à partir des mesures de la température de l'air un paramètre de prédiction de la température de l'air représentatif d'une évolution future de la température de l'air ;
-  évaluer à partir du paramètre de prédiction de la température de l'air un paramètre de prédiction de la température du liquide représentatif d'une évolution future de la température du liquide ;
-  utiliser le paramètre de prédiction de la température du liquide pour estimer un délai de gel qui sépare un instant présent d'un instant où le liquide risque de geler ;
-  générer une alarme si le délai de gel est inférieur à un seuil temporel prédéterminé.

Lorsque la température ambiante diminue, la température de l'air dans le compteur de liquide diminue plus vite que la température du liquide qui circule dans le conduit du compteur. Ceci est dû à la différence d'inertie thermique entre les deux milieux.

L'utilisation du paramètre de prédiction de la température de l'air permet donc de prédire avec un certain délai l'évolution future de la température du liquide. L'invention permet donc d'évaluer de manière fiable le délai de gel bien avant que le gel du liquide ne survienne, et donc de prédire l'heure de gel du liquide suffisamment en avance pour permettre au distributeur ou au client de protéger l'installation et le compteur.

On note que, dans le cas où le compteur comporte un composant de traitement qui intègre un capteur de température, par exemple un microcontrôleur, ledit capteur de température peut être utilisé pour produire les mesures de la température de l'air. L'invention peut donc être mise en oeuvre sans introduire de nouveau composant dans le compteur de liquide et donc de manière peu coûteuse.

On propose aussi un procédé de prédiction tel que précédemment décrit, dans lequel le paramètre de prédiction de la température de l'air est une pente de la température de l'air en fonction du temps, et dans lequel le paramètre de prédiction de la température du liquide est une pente de la température du liquide en fonction du temps.

On propose aussi un procédé de prédiction tel que précédemment décrit, dans lequel la pente de la température du liquide en fonction du temps est calculée à partir de la formule suivante :

$$\Omega = \alpha/X,$$

où $\alpha$ est la pente de la température de l'air en fonction du temps, et où X est une première constante qui dépend du liquide.
On propose aussi un procédé de prédiction tel que précédemment décrit, dans lequel le liquide est de l'eau et dans lequel on a :

$$X = 4.$$

On propose aussi un procédé de prédiction tel que précédemment décrit, comprenant les étapes de vérifier si la pente de la température de l'air en fonction du temps est positive ou négative, et d'évaluer la pente de la température du liquide en fonction du temps seulement si la pente de la température de l'air en fonction du temps est négative.
On propose aussi un procédé de prédiction tel que précédemment décrit, comprenant les étapes de comparer la température de l'air avec un seuil de température prédéterminé, et d'augmenter une fréquence des mesures de la température de l'air si la température de l'air est inférieure au seuil de température prédéterminé.
On propose aussi un procédé de prédiction tel que précédemment décrit, comprenant les étapes d'adapter un délai de mesure entre deux mesures successives de la température de l'air en fonction d'au moins un paramètre de risque représentatif d'un risque de gel.
On propose aussi un procédé de prédiction tel que précédemment décrit, dans lequel le paramètre de risque est la pente de la température du liquide en fonction du temps, et dans lequel le délai de mesure T est évalué à partir de la formule suivante :

$$T = 1/(\Omega/Y),$$

où $\Omega$ est la pente de la température du liquide en fonction du temps et où Y est une deuxième constante.
On propose aussi un procédé de prédiction tel que précédemment décrit, dans lequel la deuxième constante Y est comprise entre -0,1°C/minute et -0,3°C/minute.
On propose aussi un procédé de prédiction tel que précédemment décrit, dont la mise en oeuvre utilise un algorithme ayant une architecture modulaire comprenant un premier module agencé pour acquérir des mesures de la température de l'air et des mesures de la température du liquide et pour sauvegarder lesdites mesures, un deuxième module agencé pour calculer le paramètre de prédiction de la température de l'air, le paramètre de prédiction de la température du liquide et le délai de gel, et un troisième module agencé pour générer l'alarme en utilisant le délai de gel.
On propose aussi un procédé de prédiction tel que précédemment décrit, dans lequel le deuxième module est agencé pour adapter un délai de mesure entre deux mesures successives de la température de l'air en fonction du paramètre de prédiction de la température du liquide, et dans lequel le premier module est agencé pour utiliser ledit délai de mesure.
On propose de plus un compteur de liquide comportant un conduit dans lequel circule un liquide, un dispositif de mesure comprenant un capteur de température du liquide agencé pour produire des mesures de la température du liquide et un capteur de température de l'air agencé pour produire les mesures de la température de l'air, et un composant de traitement agencé pour mettre en oeuvre le procédé de prédiction tel que précédemment décrit.
On propose aussi un compteur de liquide tel que précédemment décrit, dans lequel le composant de traitement est un microcontrôleur dans lequel est intégré le capteur de température de l'air.
On propose de plus un programme d'ordinateur comprenant des instructions qui conduisent le composant de traitement du compteur de liquide tel que précédemment décrit à exécuter les étapes du procédé de prédiction tel que précédemment décrit.
On propose de plus un support d'enregistrement lisible par ordinateur, sur lequel est enregistré le programme d'ordinateur tel que précédemment décrit.
L'invention sera mieux comprise à la lumière de la description qui suit de modes de mise en oeuvre particuliers non limitatifs de l'invention.

BREVE DESCRIPTION DES DESSINS

Il sera fait référence aux dessins annexés parmi lesquels :

[Fig. 1] la figure 1 représente une vue en coupe transversale d'un compteur d'eau dans lequel est mise en oeuvre l'invention ;

[Fig. 2] la figure 2 est un graphique comprenant des courbes de variation de la température de l'air en fonction du temps (C1) et de variation de la température de l'eau en fonction du temps (C2) ;

[Fig. 3] la figure 3 est un graphique similaire à celui de la figure 2, la variation de la température de l'eau en fonction du temps étant approchée par une fonction linéaire ; [Fig. 4] la figure 4 représente des étapes du procédé de prédiction selon un premier mode de réalisation de l'invention ;

[Fig. 5] la figure 5 représente des étapes du procédé de prédiction selon un deuxième mode de réalisation de l'invention.

## DESCRIPTION DETAILLEE DE L'INVENTION

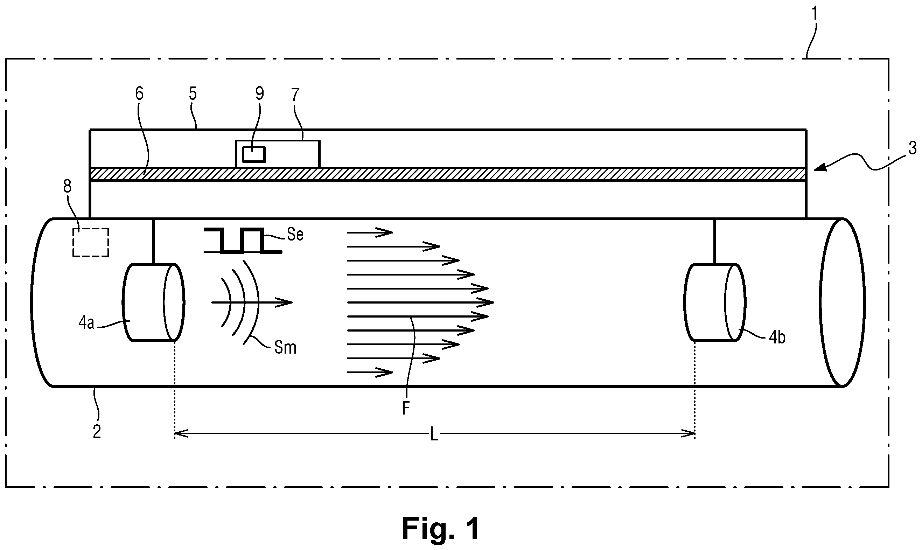

En référence à la figure 1, l'invention est ici mise en oeuvre dans un compteur de liquide qui est en l'occurrence un compteur d'eau 1 utilisé pour mesurer la consommation d'eau fournie par un réseau de distribution à l'installation d'un client.

Le compteur 1 comporte tout d'abord un module de communication (non représenté) qui permet au compteur 1 de communiquer avec un Système d'Information (SI) du distributeur, éventuellement via un concentrateur de données, une passerelle, ou bien un autre compteur (tel qu'un compteur d'eau communicant de quartier ou un compteur électrique communicant). Le module de communication est susceptible de mettre en oeuvre tout type de communication, et par exemple une communication via un réseau cellulaire de type 2G, 3G, 4G, Cat-M ou NB-IOT, une communication selon le protocole LoRa, une communication radio selon le standard *Wize* opérant à la fréquence de 169MHz, etc. Le compteur 1 transmet au SI via le module de communication, à intervalles réguliers, les mesures réalisées.

Le compteur 1 comporte de plus un conduit 2 dans lequel circule l'eau fournie par le réseau de distribution à l'installation du client, ainsi qu'un dispositif de mesure 3.

L'eau circule dans le conduit 2 d'amont en aval, comme cela est indiqué par le sens des flèches F.

Le dispositif de mesure 3 comporte un transducteur amont 4a et un transducteur aval 4b qui permettent de réaliser des mesures ultrasoniques du débit de l'eau dans le conduit 2. Le transducteur amont 4a et le transducteur aval 4b sont appairés. Le transducteur amont 4a et le transducteur aval 4b sont ici des transducteurs piézoélectriques.

Le dispositif de mesure 3 comporte aussi un module de mesure 5 relié au transducteur amont 4a et au transducteur aval 4b.

Le module de mesure 5 comporte une carte électronique 6 comprenant un composant de traitement 7 qui est adapté à exécuter des instructions d'un programme pour mettre en oeuvre le procédé de prédiction selon l'invention. Le programme est stocké dans une mémoire reliée ou intégrée dans le composant de traitement 7. Le composant de traitement 7 est ici un microcontrôleur, mais pourrait être un composant différent, par exemple un processeur, un DSP (pour *Digital Signal Processor,* que l'on peut traduire par «processeur de signal numérique »), ou bien un circuit logique programmable tel qu'un FPGA (pour *Field Programmable Gate Arrays*) ou un ASIC (pour *Application Spécifie Integrated Circuit*).

Le dispositif de mesure 3 comporte de plus un capteur de température de l'eau 8, qui mesure la température de l'eau circulant dans le conduit 2.

Le dispositif de mesure 3 comporte aussi un capteur de température de l'air 9, qui mesure la température de l'air dans le compteur 1. Le capteur de température de l'air 9 est ici intégré dans le microcontrôleur 7.

On décrit tout d'abord rapidement la manière dont le dispositif de mesure 3 mesure le débit d'eau circulant dans le conduit 2 du compteur 1.

Le microcontrôleur 7 pilote le transducteur amont 4a et le transducteur aval 4b.

Le transducteur amont 4a et le transducteur aval 4b remplissent chacun successivement la fonction d'un transducteur émetteur et d'un transducteur récepteur.

Le microcontrôleur 7 génère un signal électrique d'excitation Se, et fournit au transducteur émetteur le signal électrique d'excitation Se. Le microcontrôleur 7 fait ainsi émettre par le transducteur émetteur un signal ultrasonore de mesure Sm. Le transducteur récepteur reçoit le signal ultrasonore de mesure Sm après que le signal ultrasonore de mesure Sm a parcouru dans l'eau un trajet de longueur définie L.

Le trajet de longueur définie L est ici un trajet rectiligne entre le transducteur amont 4a et le transducteur aval 4b. La longueur définie L est typiquement égale à 7cm.

Le signal électrique d'excitation Se est ici un signal rectangulaire qui a pour fréquence $f_{us}$ et pour période $T_{us}$. La fréquence $f_{us}$ est classiquement comprise entre 900kHz et 4MHz.

Lorsque le transducteur émetteur est le transducteur amont 4a, le signal ultrasonore de mesure Sm parcourt ainsi, entre le transducteur amont 4a et le transducteur aval 4b, le trajet de longueur définie L d'amont en aval. Le transducteur récepteur (transducteur aval 4b) acquiert alors le signal ultrasonore de mesure Sm et produit un signal électrique de mesure.

Lorsque le transducteur émetteur est le transducteur aval 4b, le signal ultrasonore de mesure Sm parcourt, entre le transducteur aval 4b et le transducteur amont 4a, le trajet de longueur définie L d'aval en amont. Le transducteur récepteur (transducteur amont 4a) acquiert alors le signal ultrasonore de mesure Sm et produit un signal électrique de mesure.

Le module de mesure 5 numérise les signaux électriques de mesure. Le microcontrôleur 7 acquiert les signaux électriques de mesure numérisés, et mesure un temps de transfert global TAB du transducteur amont 4a vers le transducteur aval 4b, et un temps de transfert global TBA du transducteur aval 4b vers le transducteur amont 4a.

Le microcontrôleur 7 détermine à partir du temps de transfert global TAB et du temps de transfert global TBA le DToF, qui est le temps de vol différentiel (Differential Time of Flight).

Or, le DToF est proportionnel à la vitesse moyenne de l'eau, et le microcontrôleur 7 calcule alors la vitesse moyenne de l'eau en utilisant le DToF. La vitesse moyenne est signée et peut être positive, négative ou nulle.

Le microcontrôleur 7 déduit alors de la vitesse moyenne de l'eau le débit d'eau circulant dans le conduit 2 du compteur 1.

Le dispositif de mesure 3 permet aussi de prédire le gel de l'eau de manière anticipée.

On a constaté que, lorsque la température du milieu ambiant dans lequel se trouve le compteur 1 diminue, la température de l'air dans le compteur 1 diminue plus vite que la température de l'eau qui circule dans le conduit 2 du compteur 1. La variation de la température de l'eau est donc lente comparée à celle de la température de l'air. Ceci est dû à la différence d'inertie thermique entre les deux milieux. On estime que l'inertie de l'eau est environ quatre fois moins importante que celle de l'air.

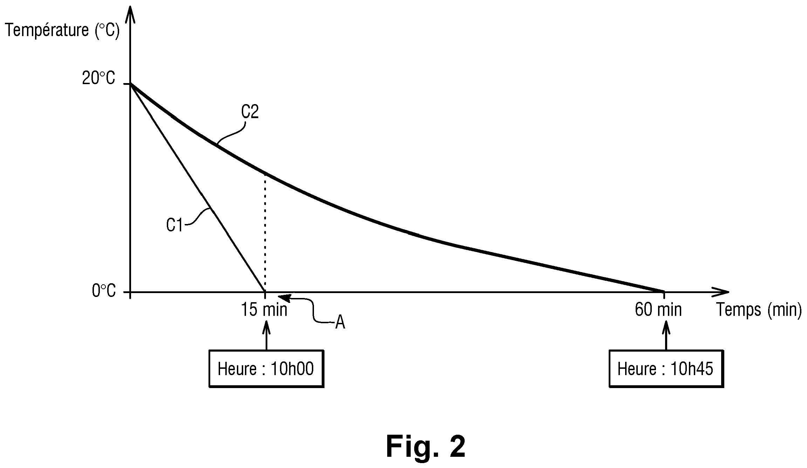

Ainsi, sur l'exemple de la figure 2, on voit que, lorsque la température de l'air dans le compteur 1 (courbe C1), mesurée par le capteur de température de l'air 9, met 15 minutes pour passer de 20°C à 0°C, la température de l'eau dans le conduit 2, mesurée par le capteur de température de l'eau 8, met 60 minutes pour passer de 20°C à 0°C. La température de l'air atteint ici 0°C à 10h00, alors que la température de l'eau atteint ici 0°C à 10h45. La température de l'eau n'atteint donc la température de l'air qu'au bout de 45 minutes (équilibre thermique).

L'invention utilise ce décalage temporel qui résulte de la différence d'inertie thermique entre les deux milieux. L'invention consiste à évaluer l'évolution de la température de l'air pour prédire de manière anticipée l'évolution de la température de l'eau et, en particulier, pour prédire de manière anticipée l'heure de gel de l'eau.

La différence d'inertie thermique permet donc de prédire l'heure de gel de l'eau et de générer une alarme avant le gel et suffisamment en avance pour permettre au distributeur ou au client d'agir pour protéger le compteur 1 et l'installation à laquelle est relié le compteur 1.

Ici, par exemple, l'alarme peut être générée à 10h00 (au temps A) en précisant que l'heure de gel est 10h45. Le compteur prévient ainsi le distributeur ou le client 45 minutes avant le risque de gel. Le message d'alarme peut être intégré dans une trame émise par le module de communication du compteur 1.

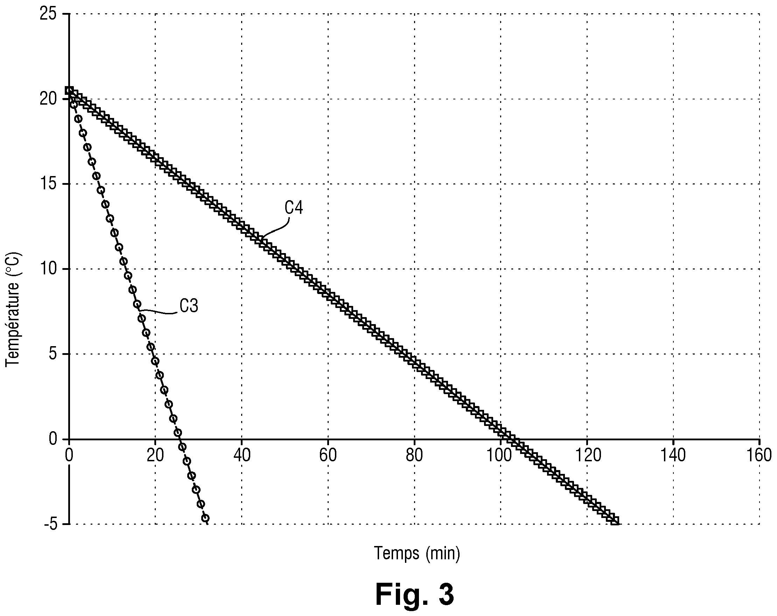

En référence à la figure 3, la variation de la température de l'air en fonction du temps peut être approchée par une fonction linéaire C3.

Dans l'exemple de la figure 3, cette fonction linéaire a pour équation :

$$y = -0,8x + 20,5,$$

y représentant la température en °C et x le temps (en minutes) .

La température de l'air passe donc de 20,5°C à 0°C en 26 minutes environ.

De même, la variation de la température de l'eau en fonction du temps peut être approchée par une fonction linéaire C4.

Dans l'exemple de la figure 3, cette fonction linéaire a pour équation :

$$Y = -0,2x + 20,5.$$

La température de l'eau passe donc de 20,5°C à 0°C en 102 minutes environ.

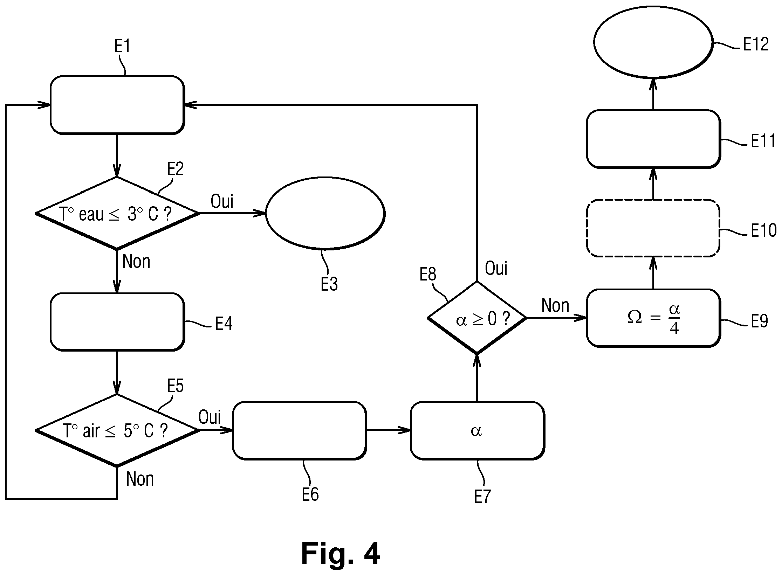

On décrit maintenant de manière plus précise, en référence à la figure 4, la mise en oeuvre du procédé de prédiction selon un premier mode de réalisation de l'invention. Les différentes étapes du procédé de prédiction sont présentées de manière séquentielle.

Le microcontrôleur 7 acquiert des mesures de la température de l'eau qui circule dans le conduit 2 (étape E1). Les mesures de la température de l'eau sont produites par le capteur de température de l'eau 8.

Le microcontrôleur 7 compare la température de l'eau T°eau avec un premier seuil prédéterminé, ici égal à 3°C (étape E2). Si la température de l'eau est inférieure (ici inférieure ou égale) au premier seuil prédéterminé, une alarme est générée instantanément (étape E3). L'alarme avertit d'un risque de gel imminent.

Si la température de l'eau T°eau est supérieure (ici strictement) au premier seuil de température prédéterminé, le microcontrôleur 7 acquiert des mesures de la température de l'air T°air dans le compteur 1 (étape E4). Les mesures de la température de l'air T°air sont produites par le capteur de température de l'air 9 intégré dans le microcontrôleur 7.

Le microcontrôleur 7 compare la température de l'air avec un deuxième seuil de température prédéterminé, ici égal à 5°C (étape E5). Si la température de l'air est supérieure (ici strictement) au deuxième seuil de température prédéterminé, le risque de gel à court terme est écarté et le procédé repasse à l'étape E1.

Si la température de l'air est inférieure (ici inférieure ou égale) au deuxième seuil de température prédéterminé, le procédé passe à l'étape E6.

A l'étape E6, du fait de la température de l'air, il existe un risque de gel de l'eau : la fréquence des mesures de la température de l'air est augmentée. La fréquence des mesures de la température de l'eau peut aussi être augmentée.

Le microcontrôleur 7 évalue à partir des mesures de la température de l'air un paramètre de prédiction de la température de l'air représentatif d'une évolution future de la température de l'air (étape E7). Le paramètre de prédiction de la température de l'air est ici une pente $\alpha$ de la température de l'air en fonction du temps.

La pente $\alpha$ est exprimée ici en °C/minutes.

La pente $\alpha$ est mesurée pendant une période de mesure $\beta$, de la manière suivante. La période de mesure $\beta$ comporte une pluralité de points de mesure. Pour chaque couple de points de mesure successifs, la pente de la droite passant par lesdits points de mesure successifs est calculée. La pente $\alpha$ est égale à la moyenne sur la période de mesure $\beta$ des pentes desdites droites. La période de mesure $\beta$ a une durée égale par exemple à 5 minutes.

Le microcontrôleur 7 vérifie alors si la pente $\alpha$ est positive ou négative : la pente $\alpha$ est donc comparée avec une pente nulle égale à 0°C/minute (étape E8).

Si la pente $\alpha$ est positive (ici positive ou nulle), c'est-à-dire si la température de l'air est constante ou est en train d'augmenter, le risque de gel à court terme est écarté et le procédé de prédiction repasse à l'étape E1.

Si la pente $\alpha$ est négative (ici strictement négative), c'est-à-dire si la température de l'air est en train de diminuer, le procédé de prédiction passe à l'étape E9.

A l'étape E9, le microcontrôleur 7 évalue à partir du paramètre de prédiction de la température de l'air un paramètre de prédiction de la température de l'eau représentatif d'une évolution future de la température de l'eau. Le paramètre de prédiction de la température de l'eau est ici une pente $\Omega$ de la température de l'eau en fonction du temps. La pente $\Omega$ est donc calculée à partir de la pente $\alpha$. Le microcontrôleur 7 évalue la pente $\Omega$ seulement si la pente $\alpha$ est négative.

La pente $\Omega$ est aussi exprimée en °C/minutes.

On utilise ici la formule suivante :

$$\Omega = \alpha/X,$$

où X est une première constante qui dépend du fluide circulant dans le conduit 2. Ici, le fluide est de l'eau, et on a :

$$X = 4.$$

La température de l'eau est alors mesurée à nouveau (étape E10 - cette étape est optionnelle car la température de l'eau a déjà été mesurée à l'étape E1).

Le microcontrôleur 7 utilise la pente $\Omega$ pour estimer un délai de gel qui sépare un instant présent d'un instant où l'eau risque de geler (étape E11).

L'instant où l'eau risque de geler est défini ici comme l'instant où la température de l'eau devient inférieure (ici inférieure ou égale) à un troisième seuil de température prédéterminé, ici égal à 3°C.

Le délai de gel est ici exprimé en minutes.

Une alarme est alors générée, indiquant le délai de gel et l'heure estimée de gel de l'eau (étape E12).

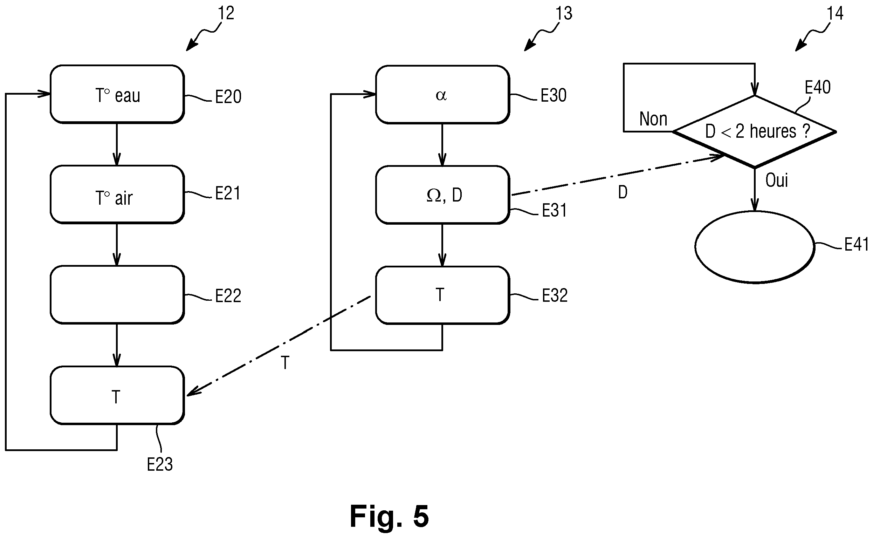

On décrit maintenant, en référence à la figure 5, la mise en oeuvre du procédé de prédiction selon un deuxième mode de réalisation de l'invention.

La mise en oeuvre du procédé de prédiction utilise un algorithme ayant une architecture modulaire comprenant un premier module 12 (module d'acquisition de mesures) agencé pour acquérir des mesures de la température de l'air et des mesures de la température de l'eau et pour sauvegarder lesdites mesures, un deuxième module 13 (module estimateur de risque) agencé pour calculer le paramètre de prédiction de la température de l'air, le paramètre de prédiction de la température de l'eau et le délai de gel, et un troisième module 14 (module de prise de décision d'alarme) agencé pour générer une alarme à partir du délai de gel.

Les trois modules échangent des données mais sont indépendants les uns des autres.

Lors de l'exécution du premier module 12, le microcontrôleur 7 acquiert tout d'abord une mesure de la température de l'eau T°eau (étape E20).

Puis, le microcontrôleur 7 acquiert une mesure de la température de l'air T°air (étape E21).

La mesure de la température de l'eau et la mesure de la température de l'air sont alors sauvegardées dans une table de mesure (étape E22). La taille de la table de mesure correspond au nombre de mesures réalisées pendant une période de mesure β. On considère ici que la fréquence des mesures de la température de l'eau est égale à la fréquence des mesures de la température de l'air, de sorte que la table de mesure contient autant de mesures de la température de l'eau que de mesures de la température de l'air.

Il n'est pas obligatoire que la fréquence des mesures de la température de l'eau soit égale à la fréquence des mesures de la température de l'air. Il serait notamment possible de prévoir que la fréquence des mesures de la température de l'air est plus élevée que la fréquence des mesures de la température de l'eau.

Le microcontrôleur 7 attend alors pendant un délai de mesure T (étape E23).

Suite au délai de mesure T, le premier module 12 repasse à l'étape E20.

Le délai de mesure T correspond donc au temps entre deux mesures de la température de l'air successives (et ici, au temps entre deux mesures de la température de l'eau successives).

Le délai de mesure T est donc égal à l'inverse de la fréquence des mesures de la température de l'air (et de l'eau).

Lors de l'exécution du deuxième module 13, le microcontrôleur 7 extrait les mesures de la température de l'air de la table de mesure et calcule la pente α de la température de l'air en fonction du temps sur la période de mesure β (étape E30).

Le microcontrôleur 7 calcule alors la pente Ω à partir de la pente α en utilisant la formule :

$$\Omega = \alpha/4 \text{ (étape E31).}$$

Le microcontrôleur 7 utilise la pente Ω pour estimer le délai de gel D qui sépare un instant présent d'un instant où l'eau risque de geler.

Le microcontrôleur 7 calcule alors un paramètre représentatif du risque de gel, et adapte le délai de mesure T, et donc la fréquence des mesures de la température de l'air, en fonction de ce paramètre (étape E32).

Le paramètre représentatif du risque de gel est ici la pente Ω. Plus la pente Ω est importante (en valeur absolue), plus le risque de gel est élevé. Le deuxième module 13 adapte donc le délai de mesure en fonction du paramètre de prédiction de la température de l'eau.

Le nouveau délai de mesure T est alors injecté dans le premier module 12 qui utilise ce nouveau délai de mesure lors de son exécution.

Lorsque le risque augmente, c'est-à-dire lorsque la pente Ω est négative et augmente en valeur absolue, le microcontrôleur 7 réduit le délai de mesure T et donc augmente la fréquence des mesures de la température de l'air (et donc la fréquence des mesures de la température de l'eau).

Au contraire, lorsque le risque diminue, le microcontrôleur 7 augmente le délai de mesure T et donc réduit la fréquence des mesures de la température de l'air (et donc la fréquence des mesures de la température de l'eau).

Cette gestion permet d'optimiser à la fois la précision des mesures et la consommation électrique du dispositif de mesure 3 et donc du compteur 1. La consommation électrique est en effet un paramètre critique, car le compteur 1 est ici alimenté par des piles et sa consommation électrique doit être limitée. L'augmentation de la fréquence des mesures entraîne une augmentation de la consommation électrique du dispositif de mesure 3.

Il est donc très avantageux d'augmenter la fréquence des mesures lorsque le risque est élevé, de manière à fournir une estimation précise du délai de gel et à éviter les fausses alarmes, et de la diminuer lorsque le risque est réduit, car une fréquence des mesures élevée n'est alors plus nécessaire. La diminution de la fréquence des mesures permet de réduire la consommation électrique.

Le délai de mesure T est évalué à partir de la formule suivante :

$$T = 1/(\Omega/Y),$$

où Y est une deuxième constante.

La deuxième constante Y est avantageusement comprise entre -0,1°C/minute et -0,3°C/minute. Ici, la deuxième constante Y est égale à -0,2°C/minute.

La deuxième constante est une valeur de référence qui permet, pour une variation de la température de l'eau de 20°C à 0°C en 100 minutes, d'obtenir un délai de mesure T égal à 1 seconde. Ce délai de mesure T est, dans ces conditions, une valeur optimisée qui permet d'obtenir une estimation précise du délai de gel sans pour autant produire des mesures avec une fréquence trop élevée qui pénaliserait le bilan de consommation électrique du dispositif de mesure 3 et donc du compteur 1.

On note que le délai de mesure est borné entre une valeur maximale (ici égale à 1 seconde) et une valeur minimale (ici égale à 0,1 seconde) . On évite ainsi que la formule du délai de mesure en fonction de la pente $\Omega$ ne génère des délais de mesure trop élevés ou trop faibles.

Le deuxième module 13 repasse alors à l'étape E30.

Le troisième module 14, quant à lui, acquiert dans le deuxième module 13 le délai de gel D, et le compare avec un seuil temporel prédéterminé (étape E40). Le seuil temporel prédéterminé est ici égal à 2 heures.

Si le délai de gel D est supérieur (ici supérieur ou égal) au seuil temporel prédéterminé, une alarme est générée, indiquant le délai de gel et l'heure estimée de gel de l'eau (étape E41).

Sinon, le troisième module 14 reboucle sur l'étape E40.

Bien entendu, l'invention n'est pas limitée aux modes de réalisation décrits mais englobe toute variante entrant dans le champ de l'invention telle que définie par les revendications.

L'invention n'est pas nécessairement mise en oeuvre dans un compteur ultrasonique, mais peut être mise en oeuvre dans tout type de compteur (par exemple dans un compteur mécanique) capable de relever la température du liquide.

L'invention peut être mise en oeuvre dans un compteur de liquide autre que l'eau, par exemple dans un compteur de pétrole. L'invention peut aussi être mise en oeuvre dans un compteur d'énergie thermique.

Les différentes étapes du procédé de prédiction ne sont pas nécessairement toutes mises en oeuvre dans le compteur. On pourrait par exemple prévoir que le compteur réalise les mesures de l'air et de l'eau et les transmette à un équipement distant (concentrateur de données, serveur, etc.) qui estime le délai de gel et génère l'alarme si nécessaire.

Le capteur de température de l'air n'est pas nécessairement intégré dans un microcontrôleur ; le composant de traitement dans lequel est mise en oeuvre (entièrement ou partiellement) l'invention et le capteur de température de l'air peuvent être des composants distincts.

Le paramètre de prédiction de la température de l'air n'est pas nécessairement une pente, mais pourrait être un paramètre différent, par exemple une ou des valeurs d'une fonction dérivée non constante (dans le cas où la variation de la température de l'air n'est pas linéaire), ou bien une durée qui sépare l'instant présent d'un instant où la température de l'air va atteindre un seuil prédéterminé, etc. Le paramètre de prédiction pourrait aussi être une fonction de plusieurs paramètres.

Ceci est aussi vrai pour le paramètre de prédiction de la température de l'eau.

De même, le paramètre de risque n'est pas nécessairement la pente de la température de l'eau en fonction du temps, mais pourrait être un paramètre différent : pente de la température de l'air, délai de gel, etc. Le paramètre de risque pourrait aussi être une fonction de plusieurs paramètres.

## Revendications

1. Procédé de prédiction du gel d'un liquide qui circule dans un conduit (2) d'un compteur de liquide (1), comprenant les étapes de :

   - acquérir des mesures d'une température de l'air dans le compteur de liquide (1) ;
   - évaluer à partir des mesures de la température de l'air un paramètre de prédiction de la température de l'air représentatif d'une évolution future de la température de l'air ;
   - évaluer à partir du paramètre de prédiction de la température de l'air un paramètre de prédiction de la température du liquide représentatif d'une évolution future de la température du liquide ;
   - utiliser le paramètre de prédiction de la température du liquide pour estimer un délai de gel qui sépare un instant présent d'un instant où le liquide risque de geler ;
   - générer une alarme si le délai de gel est inférieur à un seuil temporel prédéterminé.

2. Procédé de prédiction selon la revendication 1, dans lequel le paramètre de prédiction de la température de l'air est une pente de la température de l'air en fonction du temps, et dans lequel le paramètre de prédiction de la température du liquide est une pente de la température du liquide en fonction du temps.

3. Procédé de prédiction selon la revendication 2, dans lequel la pente de la température du liquide en fonction du temps est calculée à partir de la formule suivante :

$$\Omega = \alpha / X,$$

où $\alpha$ est la pente de la température de l'air en fonction du temps, et où X est une première constante qui dépend du liquide.

4. Procédé de prédiction selon la revendication 3, dans lequel le liquide est de l'eau et dans lequel on a :

$$X = 4.$$

5. Procédé de prédiction selon la revendication 2, comprenant les étapes de vérifier si la pente de la température de l'air en fonction du temps est positive ou négative, et d'évaluer la pente de la température du liquide en fonction du temps seulement si la pente de la température de l'air en fonction du temps est négative.

6. Procédé de prédiction selon la revendication 2, comprenant les étapes de comparer la température de l'air avec un seuil de température prédéterminé, et d'augmenter une fréquence des mesures de la température de l'air si la température de l'air est inférieure au seuil de température prédéterminé.

7. Procédé de prédiction selon la revendication 2, comprenant les étapes d'adapter un délai de mesure entre deux mesures successives de la température de l'air en fonction d'au moins un paramètre de risque représentatif d'un risque de gel.

8. Procédé de prédiction selon la revendication 7, dans lequel le paramètre de risque est la pente de la température du liquide en fonction du temps, et dans lequel le délai de mesure T est évalué à partir de la formule suivante :

$$T = 1/(\Omega/Y),$$

où $\Omega$ est la pente de la température du liquide en fonction du temps et où Y est une deuxième constante.

9. Procédé de prédiction selon la revendication 8, dans lequel la deuxième constante Y est comprise entre - 0,1°C/minute et -0,3°C/minute.

10. Procédé de prédiction selon l'une des revendications précédentes, dont la mise en oeuvre utilise un algorithme ayant une architecture modulaire comprenant un premier module (12) agencé pour acquérir des mesures de la température de l'air et des mesures de la température du liquide et pour sauvegarder lesdites mesures, un deuxième module (13) agencé pour calculer le paramètre de prédiction de la température de l'air, le paramètre de prédiction de la température du liquide et le délai de gel, et un troisième module (14) agencé pour générer l'alarme en utilisant le délai de gel.

11. Procédé de prédiction selon la revendication 10, dans lequel le deuxième module (13) est agencé pour adapter un délai de mesure entre deux mesures successives de la température de l'air en fonction du paramètre de prédiction de la température du liquide, et dans lequel le premier module (12) est agencé pour utiliser ledit délai de mesure.

12. Compteur de liquide (1) comportant un conduit (2) dans lequel circule un liquide, un dispositif de mesure (3) comprenant un capteur de température du liquide (8) agencé pour produire des mesures de la température du liquide et un capteur de température de l'air (9) agencé pour produire les mesures de la température de l'air dans le compteur de liquide (1), et un composant de traitement (7) agencé pour mettre en oeuvre le procédé de prédiction selon l'une des revendications précédentes.

13. Compteur de liquide selon la revendication 12, dans lequel le composant de traitement est un microcontrôleur (7) dans lequel est intégré le capteur de température de l'air (9) .

14. Programme d'ordinateur comprenant des instructions qui conduisent le composant de traitement (7) du compteur de liquide (1) selon l'une des revendications 12 ou 13 à exécuter les étapes du procédé de prédiction selon l'une des revendications 1 à 11.

15. Support d'enregistrement lisible par ordinateur, sur lequel est enregistré le programme d'ordinateur selon la revendication 1

**Patentansprüche**

1. Verfahren zur Vorhersage des Gefrierens einer Flüssigkeit, die in einer Leitung (2) eines Flüssigkeitszählers (1) fließt, umfassend die Schritte:

   - Erfassen von Messungen einer Lufttemperatur in dem Flüssigkeitszähler (1);
   - Evaluieren eines Vorhersageparameters der Lufttemperatur, der repräsentativ für eine zukünftige Entwicklung der Lufttemperatur ist, anhand der Messungen der Lufttemperatur;
   - Evaluieren eines Vorhersageparameters der Flüssigkeitstemperatur, der repräsentativ für eine zukünftige Entwicklung der Flüssigkeitstemperatur ist, anhand des Vorhersageparameters der Lufttemperatur;
   - Verwenden des Vorhersageparameters der Flüssigkeitstemperatur, um eine Gefrierverzögerung zu schätzen, die einen gegenwärtigen Augenblick von einem Augenblick trennt, zu dem die Flüssigkeit zu gefrieren droht;
   - Erzeugen eines Alarms, wenn die Gefrierverzögerung niedriger als ein vorbestimmter Zeitschwellenwert ist.

2. Vorhersageverfahren nach Anspruch 1, bei dem der Vorhersageparameter der Lufttemperatur eine Steigung der Lufttemperatur in Abhängigkeit von der Zeit ist, und bei dem der Vorhersageparameter der Flüssigkeitstemperatur eine Steigung der Flüssigkeitstemperatur in Abhängigkeit von der Zeit ist.

3. Vorhersageverfahren nach Anspruch 2, bei dem die Steigung der Flüssigkeitstemperatur in Abhängigkeit von der Zeit anhand der folgenden Formel berechnet wird:

$$\Omega = \alpha/X.$$

   wobei $\alpha$ die Steigung der Lufttemperatur in Abhängigkeit von der Zeit ist und wobei X eine erste Konstante ist, die von der Flüssigkeit abhängt.

4. Vorhersageverfahren nach Anspruch 3, bei dem die Flüssigkeit Wasser ist und bei dem gilt:

$$X = 4.$$

5. Vorhersageverfahren nach Anspruch 2, umfassend die Schritte des Verifizierens, ob die Steigung der Lufttemperatur in Abhängigkeit von der Zeit positiv oder negativ ist, und des Evaluierens der Steigung der Flüssigkeitstemperatur in Abhängigkeit von der Zeit, nur dann, wenn die Steigung der Lufttemperatur in Abhängigkeit von der Zeit negativ ist.

6. Vorhersageverfahren nach Anspruch 2, umfassend die Schritte des Vergleichens der Lufttemperatur mit einem vorbestimmten Temperaturschwellenwert und des Erhöhens einer Frequenz der Messungen der Lufttemperatur, wenn die Lufttemperatur niedriger als der vorbestimmte Temperaturschwellenwert ist.

7. Vorhersageverfahren nach Anspruch 2, umfassend die Schritte des Anpassens einer Messverzögerung zwischen zwei aufeinanderfolgenden Messungen der Lufttemperatur in Abhängigkeit von mindestens einem Risikoparameter, der repräsentativ für ein Gefrierrisiko ist.

8. Vorhersageverfahren nach Anspruch 7, bei dem der Risikoparameter die Steigung der Flüssigkeitstemperatur in Abhängigkeit von der Zeit ist und bei dem die Messverzögerung T anhand der folgenden Formel evaluiert wird:

$$T = 1/(\Omega/Y),$$

   wobei $\Omega$ die Steigung der Flüssigkeitstemperatur in Abhängigkeit von der Zeit und wobei Y eine zweite Konstante ist.

9. Vorhersageverfahren nach Anspruch 8, bei dem die zweite Konstante Y zwischen -0,1°C/min und -0,3°C/min liegt.

10. Vorhersageverfahren nach einem der vorhergehenden Ansprüche, dessen Durchführung einen Algorithmus verwendet, der eine modulare Architektur hat, die ein erstes Modul (12) umfasst, das ausgebildet ist, Messungen der Lufttemperatur und Messungen der Flüssigkeitstemperatur zu erfassen und die genannten Messungen zu speichern, ein zweites Modul (13), das ausgebildet ist, den Vorhersageparameter der Lufttemperatur, den Vorhersageparameter der Flüssigkeitstemperatur und die Gefrierverzögerung zu berechnen, sowie ein drittes Modul (14), das ausgebildet ist, unter Verwendung der Gefrierverzögerung den Alarm zu erzeugen.

11. Vorhersageverfahren nach Anspruch 10, bei dem das zweite Modul (13) ausgebildet ist, eine Messverzögerung zwischen zwei aufeinanderfolgenden Messungen der Lufttemperatur in Abhängigkeit von dem Vorhersageparameter der Flüssigkeitstemperatur anzupassen, und bei dem das erste Modul (12) ausgebildet ist, die genannte Messverzögerung zu verwenden.

12. Flüssigkeitszähler (1), umfassend eine Leitung (2), in der eine Flüssigkeit fließt, wobei eine Messvorrichtung (3) einen Flüssigkeitstemperatursensor (8) umfasst, der ausgebildet ist, Messungen der Flüssigkeitstemperatur zu erzeugen, und einen Lufttemperatursensor (9), der ausgebildet ist, die Messungen der Lufttemperatur in dem Flüssigkeitszähler (1) zu erzeugen, und eine Verarbeitungskomponente (7), die ausgebildet ist, das Vorhersageverfahren nach einem der vorhergehenden Ansprüche durchzuführen.

13. Flüssigkeitszähler nach Anspruch 12, bei dem die Verarbeitungskomponente ein Mikrosteuergerät (7) ist, in dem der Lufttemperatursensor (9) integriert ist.

14. Computerprogramm, umfassend Anweisungen, die die Verarbeitungskomponente (7) des Flüssigkeitszählers (1) nach einem der Ansprüche 12 oder 13 veranlassen, die Schritte des Vorhersageverfahrens nach einem der Ansprüche 1 bis 11 auszuführen.

15. Computerlesbarer Aufzeichnungsträger, auf dem das Computerprogramm nach Anspruch 14 gespeichert ist.

## Claims

1. A prediction method for predicting freezing of a liquid flowing in a pipe (2) of a liquid meter (1), the method comprising the steps of:

   · acquiring measurements of air temperature in the liquid meter (1);
   · from the air temperature measurements, evaluating an air temperature prediction parameter representative of future variation of air temperature;
   · from the air temperature prediction parameter, evaluating a liquid temperature prediction parameter representative of future variation of liquid temperature;
   · using the liquid temperature prediction parameter to estimate a duration-to-freezing between a present instant and an instant at which the liquid risks freezing;
   · generating an alarm if the duration-to-freezing is less than a predetermined time threshold.

2. A prediction method according to claim 1, wherein the air temperature prediction parameter is a slope for air temperature as a function of time, and wherein the liquid temperature prediction parameter is a slope for liquid temperature as a function of time.

3. A prediction method according to claim 2, wherein the slope for liquid temperature as a function of time is calculated using the following formula:

$$\Omega = \alpha/X,$$

where $\alpha$ is the slope for air temperature as a function of time and where X is a first constant that depends on the liquid.

4. A prediction method according to claim 3, wherein the liquid is water and wherein the following applies:

$$X = 4.$$

5. A prediction method according to claim 2, including the steps of verifying whether the slope for air temperature as a function of time is positive or negative, and of evaluating the slope for liquid temperature as a function of time only if the slope for air temperature as a function of time is negative.

**6.** A prediction method according to claim 2, including the steps of comparing air temperature with a predetermined temperature threshold, and of increasing the rate at which temperature measurements are taken if air temperature is less than the predetermined temperature threshold.

**7.** A prediction method according to claim 2, including the step of adapting a measurement waiting time between two successive air temperature measurements as a function of at least one risk parameter representative of a risk of freezing.

**8.** A prediction method according to claim 7, wherein the risk parameter is the slope of liquid temperature as a function of time, and wherein the measurement waiting time T is evaluated from the following formula:

$$T = 1/(\Omega/Y);$$

where $\Omega$ is the slope of liquid temperature as a function of time and where Y is a second constant.

**9.** A prediction method according to claim 8, wherein the second constant Y lies in the range -0.1°C/minute to -0.3°C/minute.

**10.** A prediction method according to any preceding claim that is performed by using an algorithm presenting modular architecture comprising a first module (12) arranged to acquire measurements of air and liquid temperatures and to store said measurements, a second module (13) arranged to calculate the air and liquid temperature prediction parameters and the duration-to-freezing, and a third module (14) arranged to generate an alarm from the duration-to-freezing.

**11.** A prediction method according to claim 10, wherein the second module (13) is arranged to adapt a measurement waiting time between two successive measurements of air temperature as a function of the liquid temperature prediction parameter, and wherein the first module (12) is arranged to make use of said measurement waiting time.

**12.** A liquid meter (1) including a pipe (2) in which a liquid flows, a measurement device (3) having a liquid temperature sensor (8) arranged to produce liquid temperature measurements and an air temperature sensor (9) arranged to produce air temperature measurements in the liquid meter (1), and a processor component (7) arranged to perform the prediction method according to any preceding claim.

**13.** A liquid meter according to claim 12, wherein the processor component is a microcontroller (7) having the air temperature sensor (9) incorporated therein.

**14.** A computer program including instructions that cause the processor component (7) of the liquid meter (1) according to claim 12 or claim 13 to execute the steps of the prediction method according to any one of claims 1 to 11.

**15.** A computer-readable storage medium storing the computer program according to claim 14.

Fig. 1

**Fig. 2**

Fig. 3

**Fig. 4**

Fig. 5

**EP 4 063 804 B1**

## RÉFÉRENCES CITÉES DANS LA DESCRIPTION

**Documents brevets cités dans la description**

- US 20170138023 A1

- KR 20140104592 A